# EUROPÄISCHE PATENTANMELDUNG

(11) **EP 2 096 017 A1**
(43) Veröffentlichungstag der Anmeldung: **02.09.2009**
(21) Anmeldenummer: 09002594.1
(22) Anmeldetag: 24.02.2009
(51) Int. Cl.: B62D 6/00

(54) **Vorrichtung zur Dämpfung einer Bewegung eines Lenkgebers**

(30) Priorität: 29.02.2008 DE 102008011859
(71) Anmelder: Gebr. Frei GmbH & Co. KG, 72461 Albstadt-Onstmettingen (DE)
(72) Erfinder: Schneider, Bernd, Dipl.-Ing. (FH), 72461 Albstadt (DE); Pannewitz, Manfred, Dipl.-Ing. (FH), 72419 Neufra-Freudenweiler (DE)
(74) Vertreter: Hering, Hartmut

(57) **Zusammenfassung**

Bei einer Vorrichtung zur Dämpfung einer Bewegung eines Lenkgebers (6) mit elektrischem Lenkantrieb, vorzugsweise für Flurförderzeuge, ist der Lenkgeber mit wenigstens einem mittels einer Betätigung des Lenkgebers (6) im Generatorbetrieb betriebenen Elektromotor (1) gekoppelt, zwischen dessen Polen eine Brückenschaltung (2) vorgesehen ist, wobei der Elektromotor (1) ein nur von seiner Drehzahl und der eingesetzten Brückenschaltung (2) abhängiges Bremsmoment liefert.

## Beschreibung

Die Erfindung betrifft eine Vorrichtung zur Dämpfung einer Bewegung eines Lenkgebers einer elektrischen Lenkung, vorzugsweise für Flurförderzeuge.

Es ist bekannt, dass ein Lenken beim Einsatz elektrischer oder elektrohydraulischer Lenkantriebe sehr leichtgängig erfolgt, was zur Folge hat, dass ein Bediener eines Lenkgebers, wie eines Lenkrads, ein ungutes Gefühl beim Lenken bekommt. Dies kann durch Vorsehen einer Dämpfungsvorrichtung zur Dämpfung der Bewegung des Lenkgebers bzw. der Drehbewegung des Lenkrads vermieden werden.

Bisherige Dämpfungsvorrichtungen sind oft relativ aufwändig und in Bezug auf die aufzubringende Gegenkraft zur Dämpfung der Bewegung des Lenkgebers bzw. der Drehbewegung des Lenkrads relativ unflexibel.

DE 198 20 774 A1, welches Dokument als nächstliegend angesehen wird, zeigt eine Lenkeinrichtung mit einem Lenkhandrad und einem gelenkten Rad. Das gelenkte Rad wird von einem Lenkantrieb ausgelenkt. Das Lenkhandrad ist über ein Getriebe mit einer elektrischen Maschine verbunden, die sowohl generatorisch als auch motorisch arbeiten kann. Die elektrische Maschine ist mit einer Schaltungsanordnung verbunden, die eine Einrichtung zur Erfassung der Spannung an den Klemmen der elektrischen Maschine und zur Auswertung der Spannung enthält, wobei die von der elektrischen Maschine im Generatorbetrieb erzeugte Spannung um so größer ist, je größer die Drehgeschwindigkeit des Lenkhandrads ist. Weiterhin enthält die Schaltungsanordnung eine Einrichtung, wie beispielsweise einen veränderlichen Widerstand, mit deren Hilfe das Lastverhältnis der Schaltungsanordnung verändert werden kann. Insbesondere kann das Moment, das der Benutzer aufbringen muss, um das Lenkhandrad zu drehen, durch eine Änderung des Widerstands geändert werden.

DE 100 21 814 B4 zeigt ein Lenksystem für ein Kraftfahrzeug, das einen Steerby-wire-Betrieb ermöglicht. Ein Handmomentensteller weist einen Elektromotor auf, der so mit einer Lenkhandhabe verbunden ist, dass Verstellbewegungen der Lenkhandhabe mit Relativverdrehungen zwischen einem Rotor und einem Stator des Elektromotors einhergehen. Es sind Dämpfungsmittel vorgesehen, die eine Schaltungsanordnung aufweisen, die Wicklungen des Elektromotors so schaltet, dass die Spannungen, die durch die Relativverdrehungen induziert werden, Dämpfungsmomente erzeugen, die den Relativverdrehungen entgegenwirken. Die Schaltungsanordnung bewirkt, dass der Elektromotor beim Ausfall des Handmomentenstellers als Generator arbeitet.

DE 10 2006 031 290 A1 zeigt eine Lenkwelle für ein Lenkrad mit feststehender Lenknabe und einem Überlagerungsgetriebe.

Es ist die Aufgabe der Erfindung, eine Vorrichtung zur Dämpfung einer Bewegung eines Lenkgebers einer elektrischen Lenkung, vorzugsweise für Flurförderzeuge, mit einfachem Aufbau zur Verfügung zu stellen, welche Vorrichtung bezüglich der Dämpfung flexibel ausgebildet ist.

Diese Aufgabe wird erfindungsgemäß durch die im Anspruch 1 angegebene Vorrichtung gelöst. Die abhängigen Ansprüche 2 bis 12 zeigen spezielle Ausführungsformen der Vorrichtung gemäß Anspruch 1.

Bei der erfindungsgemäßen Vorrichtung zur Dämpfung einer Bewegung eines Lenkgebers mit elektrischem Lenkantrieb ist insbesondere der Lenkgeber mit wenigstens einem mittels einer Betätigung des Lenkgebers im Generatorbetrieb betriebenen Elektromotor gekoppelt, zwischen dessen Polen eine Brückenschaltung vorgesehen ist. Dabei liefert der Elektromotor insbesondere ein nur von seiner Drehzahl und der eingesetzten Brückenschaltung abhängiges Bremsmoment.

Die Brückenschaltung ist bevorzugt ein Widerstand, der besonders bevorzugt regelbar ist.

Erfindungsgemäß wird somit durch ledigliches Vorsehen eines einfach aufgebauten Elektromotors mit einer Brückenschaltung zwischen seinen Polen eine geeignete Dämpfung der Bewegung eines Lenkgebers erreicht. Die Brückenschaltung kann jeweils geeignet für eine beabsichtigte Dämpfung gewählt werden und kann auch regelbar ausgebildet sein. Damit ist ein flexibler Einsatz der erfindungsgemäßen Dämpfungsvorrichtung möglich.

Der Lenkgeber ist vorzugsweise ein Lenkrad.

Das Lenkrad ist vorzugsweise um eine Achse drehbar vorgesehen. Es kann beispielsweise an einer Nabe drehbar vorgesehen sein. Bevorzugt ist das Lenkrad an einer Drehachse, zusammen mit dieser drehbar, vorgesehen. Die Drehachse ist bevorzugt in einer Lagerung gelagert, die in einer Aufnahme aufgenommen ist.

Der Elektromotor ist vorzugsweise durch eine sich in einem Magnetfeld drehende Spule definiert.

Weiterhin ist die Drehachse gemäß einem Ausführungsbeispiel über eine Kopplungseinrichtung mit dem Elektromotor gekoppelt ist. Die Kopplungseinrichtung kann eine Getriebeeinrichtung sein und somit beispielsweise Zahnräder, Zahnriemen, Keilriemen, andere Riementriebe, Ketten oder Reibräder aufweisen.

Gemäß einem weiteren Ausführungsbeispiel sind die Spule und das Magnetfeld, die den Elektromotor bilden, konzentrisch zur Drehachse vorgesehen, so dass keine zusätzliche Kopplungseinrichtung vorgesehen werden muss.

Die angegebenen und weitere Merkmale und Einzelheiten der Erfindung werden einem Fachmann auf dem Gebiet aus der folgenden detaillierten Beschreibung und der beigefügten Zeichnung klarer werden, die Merkmale der vorliegenden Erfindung anhand eines Beispiels darstellt und wobei:

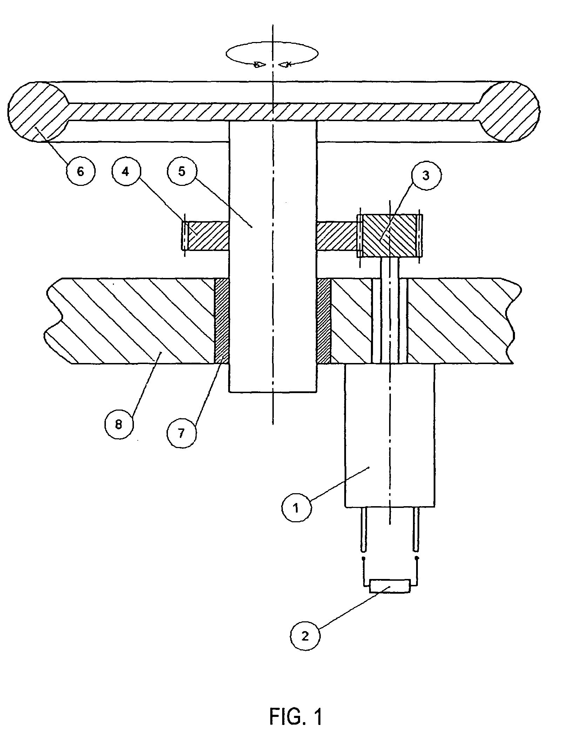

Fig. 1 eine schematische Ansicht einer Dämpfungsvorrichtung gemäß einer bevorzugten Ausführungsform der Erfindung zeigt.

Im Folgenden wird die vorliegende Erfindung anhand bevorzugter Ausführungsformen unter Bezugnahme auf die beigefügte Zeichnung detailliert erklärt.

Die Figur 1 zeigt eine schematische Ansicht einer erfindungsgemäßen Dämpfungsvorrichtung. Die Dämpfungsvorrichtung ist insbesondere aus einem Elektromotor 1 gebildet, an dessen Polen eine Brückenschaltung 2 angeschlossen werden kann. Die Brückenschaltung 2 ist vorzugsweise ein Widerstand und besonders bevorzugt ein regelbarer Widerstand.

Der Elektromotor 1 ist bevorzugt durch eine sich in einem Magnetfeld drehende Spule definiert.

Bei dem in Figur 1 gezeigten Ausführungsbeispiel ist der Elektromotor 1 über eine Kopplungseinrichtung 3, 4 mit einer Drehachse 5 gekoppelt, wobei die Kopplungseinrichtung 3, 4, die gemäß der Figur 1 jeweils am Elektromotor 1 und an der Drehachse 5 vorgesehen ist, eine Getriebeeinrichtung sein und somit beispielsweise Zahnräder, Zahnriemen, Keilriemen, andere Riementriebe, Ketten oder Reibräder aufweisen kann.

An der Drehachse 5 ist ein Lenkrad 6 als Lenkgeber befestigt. Bei einer Betätigung des Lenkrads 6 durch einen Bediener dreht sich die Drehachse 5 mit dem Lenkrad 6 und dadurch wird der Elektromotor 1 über die Kopplungseinrichtung 3, 4 im Generatorbetrieb betrieben. Der Elektromotor 1 dreht sich zusammen mit der Drehbewegung des Lenkrads 6 und der Drehachse 5. Durch die an seinen Polen angeschlossene Brückenschaltung 2 wird am Elektromotor 1 ein Bremsmoment ausgeübt, das von seiner Drehzahl und der Auslegung des Brückenschaltung 2 abhängt und über die Kopplungseinrichtung 3, 4 die Drehbewegung der Drehachse 5 und somit des Lenkrads 6 dämpft.

Als weiteres Ausführungsbeispiel, das in der Figur 1 nicht gezeigt ist, können die Spule und das Magnetfeld, die den Elektromotor bilden, konzentrisch zur Drehachse vorgesehen sein, so dass keine zusätzliche Kopplungseinrichtung vorgesehen werden muss. Damit ergibt sich ein besonders einfacher Aufbau der erfindungsgemäßen Dämpfungsvorrichtung.

Die Drehachse 5 ist bei dem in Figur 1 gezeigten Ausführungsbeispiel in einer Lagerung 7 gelagert, die in einer Aufnahme 8 aufgenommen ist. An dieser Aufnahme 8 ist hier auch der Elektromotor 1 vorgesehen.

Das Lenkrad 6 muss jedoch nicht an einer Drehachse 5 angebracht sein. Vielmehr kann die Drehbewegung des Lenkrads 6 auch auf andere Weise erreicht werden. Beispielsweise kann das Lenkrad 6 an einer Nabe vorgesehen sein.

Erfindungsgemäß können natürlich auch mehrere Elektromotoren gleich dem oben beschriebenen Elektromotor 1 vorgesehen werden.

Die erfindungsgemäße Dämpfungsvorrichtung ist einfach aufgebaut und zeigt insbesondere eine große Flexibilität bezüglich ihres Einsatzes. Eine Brückenschaltung kann regelbar ausgebildet sein. Es können ohne großen Aufwand auch jeweils verschieden ausgestaltete Brückenschaltungen an die Pole des Elektromotors angeschlossen werden. Weiterhin können je nach Einsatzart und

Dämpfungserfordernis für eine Bewegung eines Lenkgebers bzw. eine Drehbewegung eines Lenkrads mehr als ein Elektromotor vorgesehen werden. Somit kann auf relativ einfache Weise erreicht werden, dass ein Bediener kein unangenehmes Gefühl beim Bedienen eines Lenkrads mit elektrischem Lenkantrieb hat.

## Patentansprüche

1. Vorrichtung zur Dämpfung einer Bewegung eines Lenkgebers (6) mit elektrischem Lenkantrieb, vorzugsweise für Flurförderzeuge, wobei der Lenkgeber (6) mit wenigstens einem mittels einer Betätigung des Lenkgebers (6) im Generatorbetrieb betriebenen Elektromotor (1) gekoppelt ist, zwischen dessen Polen eine Brückenschaltung (2) vorgesehen ist, **dadurch gekennzeichnet, dass** der Elektromotor (1) ein nur von seiner Drehzahl und der eingesetzten Brückenschaltung (2) abhängiges Bremsmoment liefert.

2. Vorrichtung nach Anspruch 1, **dadurch gekennzeichnet, dass** der Lenkgeber (6) ein Lenkrad ist.

3. Vorrichtung nach Anspruch 2, **dadurch gekennzeichnet, dass** das Lenkrad (6) um eine Achse drehbar vorgesehen ist.

4. Vorrichtung nach Anspruch 3, **dadurch gekennzeichnet, dass** das Lenkrad (6) an einer Nabe drehbar vorgesehen ist.

5. Vorrichtung nach Anspruch 3, **dadurch gekennzeichnet, dass** das Lenkrad (6) an einer Drehachse (5) zusammen mit dieser drehbar vorgesehen ist.

6. Vorrichtung nach einem der vorangehenden Ansprüche, **dadurch gekennzeichnet, dass** der Elektromotor (1) durch eine sich in einem Magnetfeld drehende Spule definiert ist.

7. Vorrichtung nach Anspruch 5 und 6, **dadurch gekennzeichnet, dass** die Drehachse (5) über eine Kopplungseinrichtung (3, 4) mit dem Elektromotor (1) gekoppelt ist.

8. Vorrichtung nach Anspruch 7, **dadurch gekennzeichnet, dass** die Kopplungseinrichtung (3, 4) eine Getriebeeinrichtung ist und beispielsweise Zahnräder, Zahnriemen, Keilriemen, andere Riementriebe, Ketten oder Reibräder aufweist.

9. Vorrichtung nach Anspruch 5 und 6, **dadurch gekennzeichnet, dass** die Spule und das Magnetfeld, die den Elektromotor (1) bilden, konzentrisch zur Drehachse (5) vorgesehen sind.

10. Vorrichtung nach einem der vorangehenden Ansprüche, **dadurch gekennzeichnet, dass** die Brückenschaltung (2) einen Widerstand aufweist.

11. Vorrichtung nach Anspruch 7, **dadurch gekennzeichnet, dass** der Widerstand der Brückenschaltung (2) regelbar ist.

12. Vorrichtung nach einem der Ansprüche 5 bis 11, **dadurch gekennzeichnet, dass** die Drehachse (5) in einer Lagerung (7) gelagert ist, die in einer Aufnahme (8) aufgenommen ist.
